## Europäisches Patentamt

## European Patent Office

## Office européen des brevets

(19)

(11) Veröffentlichungsnummer: **0 092 725**

**B1**

(12)

# EUROPÄISCHE PATENTSCHRIFT

(45) Veröffentlichungstag der Patentschrift:
**04.11.87**

(51) Int. Cl.⁴: **B 29 B 7/48,** B 29 C 47/76

(21) Anmeldenummer: **83103477.2**

(22) Anmeldetag: **11.04.83**

(54) **Vorrichtung zum Austragen hochviskoser Medien in der chemischen Verfahrenstechnik.**

(30) Priorität: **23.04.82 DE 3215273**

(43) Veröffentlichungstag der Anmeldung:
**02.11.83 Patentblatt 83/44**

(45) Bekanntmachung des Hinweises auf die Patenterteilung:
**04.11.87 Patentblatt 87/45**

(84) Benannte Vertragsstaaten:
**DE FR GB IT**

(56) Entgegenhaltungen:
**FR-A-1 215 266**
**FR-A-1 347 248**
**US-A-3 118 744**
**US-A-3 255 814**
**US-A-3 809 140**

(73) Patentinhaber: **BAYER AG, Konzernverwaltung RP Patentabteilung, D-5090 Leverkusen 1 Bayerwerk (DE)**

(72) Erfinder: **Ullrich, Martin, Dipl.- Ing., Mendelssohnstrasse 32, D-5090 Leverkusen (DE)**
Erfinder: **Hederich, Manfred, Ing.- grad., Uppersberg 56, D-5090 Leverkusen (DE)**
Erfinder: **Wingler, Frank, Dr., Walter- Flex- Strasse 17, D-5090 Leverkusen (DE)**

**Beschreibung**

Die Erfindung betrifft eine Vorrichtung zum Austragen hochviskoser Medien aus Verdampfern oder Reaktoren. Die Vorrichtung besteht aus einer Abscheidezone mit mindestens vier Schneckenwellen, von denen wenigstens einige miteinander in Eingriff stehen und einer als Druckaufbaustrecke nachgeschalteten mehrwelligen Schneckenpumpe.

In der Hochviskosetechnik und in der Polymertechnologie werden Entspannungsverdampfer und Spiralrohr- bzw. Schlangenrohrverdampfer zur Aufkonzentrierung hochviskoser Lösungen eingesetzt. Bei besonders wirtschaftlicher Fahrweise, d.h. bei weitgehender Konzentrierung stellen derartige Verdampfer an ihrem Ausgang das Problem einer kontrollierten, betriebssicheren Abscheidung des nur wenig oder nicht mehr fließfähigen Konzentrats von sehr großen Dampfmengen.

Eine ähnliche Problematik ergibt sich an Verdampfungs- und Entgasungsvorrichtungen, bei denen die Lösung zu einer Vielzahl von freifallenden Strängen, Filmen, Strähnen oder Fäden geformt und so mit großer Oberfläche in einem Vakuumraum aufkonzentriert wird. Die größeren Querschnitte solcher Entgasungssysteme bedingen nach dem Stand der Technik an ihrem unteren Ende einen Sumpf, in dem sich die konzentrierte Schmelze unter der Schwerkraft sammelt und zentral einer Zahnradpumpe zufließt. Empfindliche Stoffe können in dieser schleichenden, laminaren Sumpfströmung mit langer Verweilzeit, breiter Verweilzeitverteilung und hoher Temperatur thermisch geschädigt werden, Verfärbungen erleiden und teilweise zersetzt werden, was zu unbrauchbarem Produkt führt.

Vorrichtungen mit zwei V-förmig geöffneten, gleichsinnig rotierenden Schneckenpaaren (s. US-A-3 809 140, DE-B-1 964 949, DE-B-1 964 946 und H. Herrmann; Schneckenmaschinen in der Verfahrenstechnik, Springer-Verlag 1972, S. 154-157) haben den Nachteil eines aufwendigen 4-Wellen-Gleichdrall-Getriebes und einer begrenzten Aufnahmefähigkeit, da der Stoff in 8-förmiger Bewegung um die Wellen herumgeführt wird und somit auf der Oberseite unter Teilfüllung der Schneckengänge wieder auftaucht. Weiterhin übt das Gleichdrallsystem erhöhte Scherwirkungen auf das Produkt aus.

Bei einer anderen Vorrichtung (US-A-3 395 746) ist eine Entspannungskammer für Polymerlösungen mit einer gegenläufigen, profilierten Doppelwalze als Austragsorgan und einer gegenläufigen, kammenden Doppelschnecke als Fortsetzung der beiden Walzen vorgesehen. Neben der begrenzten Aufnahmebreite ist die fehlende Selbstreinigung der nichtkämmenden Doppelwalze von Nachteil.

Eine aus vier schräg verzahnten Zahnrädern in V-förmiger Anordnung gebildete Abscheidepumpe für die Entspannungsverdampfung schaumiger, viskoser Lösungen wird in US-A-3 280 886 beschrieben. Alle vier Räder sind gegensinnig miteinander in Eingriff, die unteren dichtkämmend selbstreinigend, die oberen mit absichtlich großen Lücken zur Produktaufnahme. Die Apparatur hat zwei Produkteinlässe - nicht in den offenen Dampfraum, sondern geschlossen in den Bereich der oberen Zahnräder - und einen unteren Konzentratauslaß. Drehrichtung und Zahngeometrie sind so gestaltet, daß der Stoff zwischen Ein- und Ausgang sich jeweils S-förmig um zwei Zahnräder bewegt. Die Vorrichtung ist nicht entwickelt für Verdampfertypen mit freifallenden Fäden etc., sondern nur für Entspannungsverdampfungen. Zu kritisieren ist die fehlende Selbstreinigung der oberen Räder, die geringe Fördermenge infolge des ungewöhnlichen, S-förmigen Förderprinzips durch verringerte Zahnbreiten und die daher notwendigen hohen, scherungsintensiven Drehzahlen.

Aufgabe der vorliegenden Erfindung ist es, für alle obengenannten Verdampfertypen der Hochviskos- und Polymertechnologie geeignete zwangsweise fördernde, betriebssichere, produktschonende und kostengünstige Abscheide- und Austragsvorrichtungen auf Basis einer mehrwelligen Schneckenpumpe zu entwickeln.

Diese Aufgabe wird ausgehend von der eingangs beschriebenen Vorrichtung erfindungsgemäß dadurch gelöst, daß die Schneckenwellen paarweise gegensinnig rotierend angetrieben sind und daß die beiden mittleren Schneckenwellen achsengleich in die Schneckenwellen der Druckaufbaustrecke übergehen und dort als ineinandergreifende Gegendrallschnecke fortgesetzt sind. Bei einer Ausführungsform bilden die Schneckenwellen eine V-förmige Abscheidewanne. Bei einer anderen Ausführungsform liegen sie alle in einer Ebene.

Vorteilhaft besteht die Abscheidepumpe aus vier Schneckenwellen, wobei die beiden äußeren Schneckenwellen und die beiden mittleren Schneckenwellen jeweils symmetrisch zueinander angeordnet sind, und zwar um die Mittelachse des Gehäuses als Symmetrieachse.

Eine Weiterentwicklung ist dadurch gekennzeichnet, daß im Bereich der Abscheidezone die Schneckenddurchmesser und der Abstand zwischen den beiden mittleren Schneckenwellen so groß gewählt sind, daß sie sich nicht im Eingriff befinden und nur die äußeren Wellen mit den mittleren im Eingriff stehen, und daß im Bereich der Druckaufbaustrecke die mittleren Schnecken mit größerem Durchmesser fortgesetzt sind.

Der Antrieb der Abscheidepumpe kann so ausgebildet sein, daß entweder nur eine Schneckenwelle oder die beiden mittleren Schneckenwellen oder sämtliche Schneckenwellen angetrieben sind.

Mit der Erfindung werden folgende Vorteile erzielt:

1. Aufgrund der paarweise dichtkämmenden Förderelemente ist die Austragvorrichtung selbstreinigend.

2. Die erfindungsgemäße Austragsgeometrie bedingt eine hohe Aufnahmefähigkeit (Schluckfähigkeit) für das Konzentrat. Dabei wird das Konzentrat ständig auf der Wellenunterseite weggefördert und auf der Oberseite neue, aufnahmebereite Leerräume bereitgestellt.

3. Die Austragsvorrichtung kann ohne Schwierigkeiten mit allen eingangs genannten Verdampfertypen kombiniert werden.

4. Es erfolgt ein scherungsarmer und produktschonender Austrag; d.h. das Produkt wird beim Austrag keinen unnötigen mechanischen Belastungen ausgesetzt.

5. Der aus dem Verdampfer austretende Konzentratstrom wird durch die äußeren bzw. oberen, vorzugsweise nach außen drehenden Wellen in mehrere Teilströme aufgeteilt und zerlegt. Dies hat eine noch bessere Entgasung und Eindampfung zur Folge, weil eingeschlossene Dampfblasen freigesetzt werden können.

6. Aufgrund des allseitigen Gegendralles der Schnecken ist keine aufwendige Antriebstechnik erforderlich. Im einfachsten Fall genügt eine einzige Antriebswelle.

7. Die Vorrichtung kombiniert eine sehr große "schluckfähige", zwangsfördernde Abscheidekammer mit einem daran anschließenden hochintensiven Druckaufbauabschnitt.

Damit ist die neue Austragvorrichtung ein wichtiges Bauelement zur Lösung der Problematik an kritischen Übergabestellen zwischen verschiedenen Verfahrensstufen in der Hochviskostechnik.

Im folgenden werden Ausführungsbeispiele der Erfindung anhand von Zeichnungen näher erläutert. Es zeigen:

Fig. 1 eine Austragvorrichtung mit V-förmig angeordneten Schneckenwellen;

Fig. 2 eine Austragvorrichtung, bei der die Schneckenwellen in einer Ebene angeordnet sind;

Fig. 3 eine detaillierte Darstellung der Austragvorrichtung mit V-förmiger Anordnung der Schneckenwellen und

Fig. 4 eine Draufsicht der Austragvorrichtung nach Fig. 3.

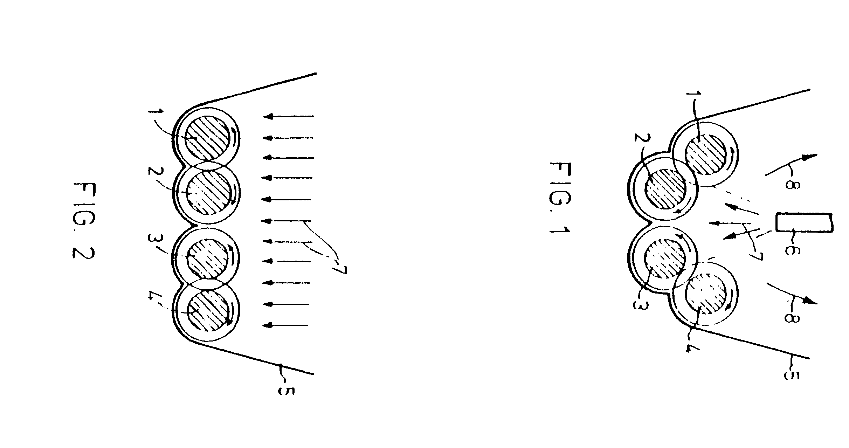

Gemäß Fig. 1 sind vier Schneckenwellen 1, 2, 3, 4 derart in der Bodenzone einer V-förmigen Abscheidewanne 5 angeordnet, daß jeweils die Achsen der beiden unteren Schneckenwellen 2, 3 und die Achsen der beiden oberen Schneckenwellen 1 und 4 auf gleicher Höhe liegen. Der Drehsinn einer Schneckenwelle ist gegenüber den benachbarten Wellen stets entgegengesetzt. In der Zeichnung ist angedeutet, daß sich die Schnecken 1 und 2 und die Schnecken 3 und 4 miteinander im Eingriff befinden, während zwischen den Schnecken 2 und 3 eine Lücke verbleibt; d.h. diese beiden Schneckenwellen befinden sich nicht im Eingriff.

Das aus dem Verdampferausgang 6 austretende dickflüssige Konzentrat 7 wird von den Schneckenwellen 1 bis 4 erfaßt und in axialer Richtung weggefördert. Der gleichzeitig freiwerdende Dampf (mit 8 angedeutet) kann nach oben abströmen.

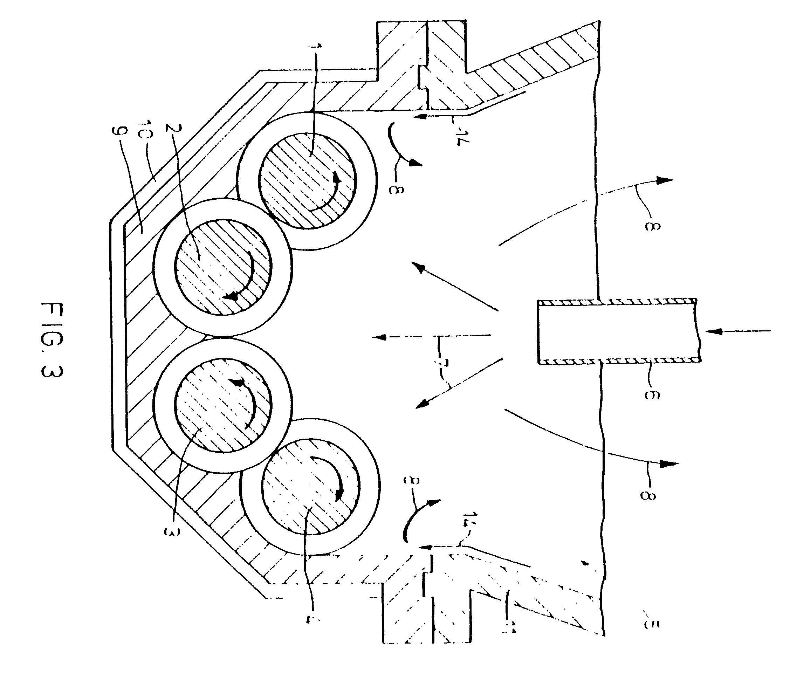

In Fig. 2 ist die flächig ebene Version der Austragvorrichtung dargestellt. Alle vier Schneckenwellen liegen hier in einer Ebene und bilden eine maximal breite selbstreinigende und zwangsfördernde Austragsfläche. Diese Version bietet sich an, wenn am Verdampferausgang eine Vielzahl von ruhig fließenden Konzentratsträngen, frei fallenden Filmen, Strähnen oder Fäden anfällt. Ein solcher Fall liegt z. B. vor am Ausgang von Vielfachentspannungsverdampfern oder in "Brause"-Restentgasern. Mit Hilfe der neuen Austragvorrichtungen können solche Apparaturen nunmehr auch in Viskositätsbereichen betrieben werden, die ihnen bisher verschlossen waren.

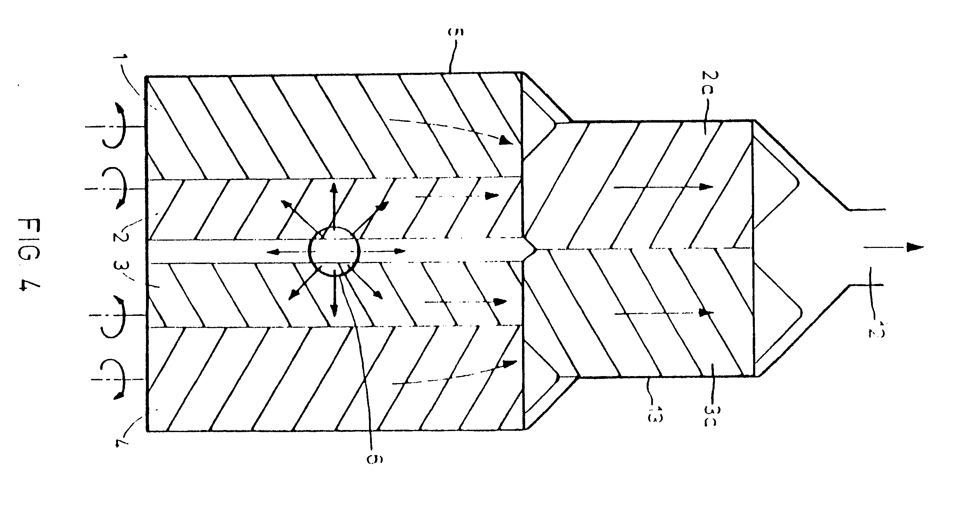

Anhand von Fig. 3 (Querschnitt) und Fig. 4 (Draufsicht) wird nun die Abscheidevorrichtung auf Basis der V-förmigen Anordnung der Schneckenweilen noch einmal im Detail erläurert. Die aus den Schneckenwellen bis 4 gebildete V-förmige Abscheidewanne kann hinsichtlich ihres Öffnungswinkels in einem ziemlich weiten Bereich variiert werden. So hat sich z. B. ein Öffnungswinkel von 90° für den vollständigen, greiferähnlichen Einzug eines hochviskosen, schaumigen, zusammenhängenden und auch teilweise unruhig laufenden Produktstranges aus dem Verdampferausgang bewährt. Der Produktstrang darf auch seitlich ausweichen und gerät dann in den Bereich der obern Schnecken 1 und 4, wo er ebenfalls kontrolliert erfaßt und eingezogen wird. Die Mündungsöffnung des Verdampferrohres 6 kann in ihrer Höhe über der Abscheidewanne 5 entsprechend den Produkterfordernissen variiert werden. Das Gehäuse 9 im unteren Teil der Abscheidewanne 5 bildet entsprechend der geometrischen Anordnung der Schneckenwellen 1 bis 4 ein halbseitiges reguläres Achteck. Der Mantel 10 des Gehäuses 9 kann beheizt werden. Das Oberteil 11 der Abscheidewanne 5 hat eine konische Form.

Aus Fig. 4 ist ersichtlich, daß die beiden unteren Schneckenwellen 2 und 3 nicht miteinander kämmen sondern im Hinblick auf ein greiferähnliches Einzugsverhalten auf Lücke oder tangierend eingestellt sind. Ihre Reinigung erfolgt durch die beiden oberen Schnecken 1 und 4. Außerdem sind die beiden unteren Schneckenwellen 2 und 3 in axialer Richtung verlängert. Die vierwellige Einzugsgeometrie besteht also nur im Bereich der Abscheidezone (Fig. 3). Im Bereich der Austrags- und Druckaufbaustrecke sind die beiden unteren Schneckenwellen 2 und 3 mit größerem Verhältnis von Außendurchmesser zu Kerndurchmesser ineinander eingreifend als Gegendrallschnecke 2a, 3a fortgesetzt. Der vierwelligen Schneckenpumpe im Abscheidebereich (Fig. 3) ist also eine zweiwellige Schneckenpumpe (2a, 3a) als Druckaufbaustrecke nachgeschaltet, wobei die beiden mittleren Schnecken der Abscheidezone achsengleich in die Schnecken der Druckaufbaustrecke übergehen. Auf diese Weise kann mit einer einzigen Apparatur eine hochwirksame Abscheidung erzielt und gleichzeitig ein hoher Druck am Ausgang 12 aufgebaut werden. Da in der Druckaufbauzone die beiden oberen Schnecken 1 und 4 entfallen, sind die Gehäusedimensionen entsprechend vermindert. Man kann also zwischen einem Abscheidegehäuse 5 (bzw. 11 und 9) und einem Druckaufbaugehäuse 13 (s. Fig. 4) unterscheiden. Als Antrieb für die Austragevorrichtung ist ein Motor mit einer oder den beiden unteren Schneckenwellen 2 und 3 verbunden. Die nicht direkt von außen angetriebenen Schneckenwellen werden dann über den Gegendrall-Eingriff im Produktraum mit angetrieben. Auch ein einfaches Vierlings-Gegendrallgetriebe zum getrennten Antrieb aller Schneckenwellen ist ohne großen Aufwand möglich.

Die Wirkungsweise läßt sich in folgender Weise beschreiben. Bei kleineren Durchsätzen wird der hochviskose Konzentratstrang 7 vollständig von den beiden unteren Schneckenwellen 2 und 3 eingezogen. Bei größeren Durchsätzen wird der Hauptanteil ebenfalls mittig eingezogen, während kleinere Anteile, die auf die oberen Schneckenwellen 1 und 4 geraten, entsprechend ihrer Drehrichtung nach außen getragen werden und dort ebenfalls in den Einzugstaschen zwischen den Schnecken und der Wand 5 eingezogen werden. Damit zerteilen bei großen Durchsätzen die beiden kämmenden Wellenpaare 1-2 und 3-4 den Konzentratstrom in drei Teilströme, wodurch eine zusätzliche Dampffreisetzung aus dem hochviskosen Schaum erleichtert und der Konzentratstrang zergliedert und flächig ausgebreitet wird.

Bei sehr unruhiger pulsierender Verdampfung (Spritzen) können die oberhalb der Schneckenwellen 1 bis 4 liegenden Wände der Abscheidekammer so schwach gekühlt werden, daß sie mit einem dünnen Kondensatfilm 14 belegt sind. Dieser Kondensatfilm wird über die Kühltemperatur so klein eingestellt, daß er in dem geheizten Teil 9 der Abscheidewanne spontan verdampft.

Zusammenfassend wird noch einmal darauf hingewiesen, daß die neue Austragsvorrichtung universell bei der Lösung von Problemen herangezogen werden kann, die durch die Koppelung zweier aufeinanderfolgender Verfahrensstufen in der Hochviskostechnik entstehen.

**Patentansprüche**

1. Vorrichtung zum Austragen hochviskoser Medien aus Verdampfern oder Reaktoren, bestehend aus einer Abscheidezone mit mindestens vier Schneckenwellen, von denen wenigstens einige miteinander in Eingriff stehen und einer als Druckaufbaustrecke nachgeschalteten mehrwelligen Schneckenpumpe, dadurch gekennzeichnet, daß die Schneckenwellen (1, 2, 3, 4) paarweise gegensinnig rotierend angetrieben sind und die beiden mittleren Schneckenwellen (2, 3) achsengleich in die Schneckenwellen (2a, 3a) der Druckaufbaustrecke übergehen und dort als ineinandergreifende Gegendrallschnecke (2a, 3a) fortgesetzt sind.

2. Vorrichtung nach Anspruch 1, dadurch gekennzeichnet, daß die Schneckenwellen (1 bis 4) eine V-förmige Abscheidewanne bilden.

3. Vorrichtung nach Anspruch 1, dadurch gekennzeichnet, daß alle Schneckenwellen (1 bis 4) in einer Ebene liegen.

4. Vorrichtung nach einem der Ansprüche 1 bis 3, dadurch gekennzeichnet, daß die Schneckenpumpe in der Abscheidezone aus vier Schneckenwellen (1 bis 4) besteht und daß die äußeren und mittleren Schneckenwellen jeweils symmetrisch zueinander (um die Mittelachse des Gehäuses als Symmetrieachse) angeordnet sind.

5. Vorrichtung nach einem der Ansprüche 1 bis 4, dadurch gekennzeichnet, daß nur eine Schneckenwelle (2 oder 3) angetrieben ist.

6. Vorrichtung nach einem der Ansprüche 1 bis 4, dadurch gekennzeichnet, daß die beiden mittleren Schneckenwellen (2, 3) angetrieben sind.

7. Vorrichtung nach einem der Ansprüche 1 bis 6, dadurch gekennzeichnet, daß im Bereich der Abscheidezone der Schneckendurchmesser und der Abstand zwischen den beiden mittleren Schneckenwellen (2, 3) so groß gewählt sind, daß sich diese beiden Schnecken nicht im Eingriff befinden und nur die äußeren Schnecken (1 und 4) mit den mittleren im Eingriff stehen, und daß im Bereich der Druckaufbaustrecke die mittleren Schnecken mit größerem Durchmesser fortgesetzt sind.

**Claims**

1. Apparatus for discharging highly viscous media from evaporators or resctors, consisting of a separating zone with at least four screw shafts, at least some of which engage with each other and a multi-shaft screw pump arranged downstream in the form of a pressure build-up zone, characterised in that the screw shafts (1, 2, 3, 4) are driven in pairs rotating in opposite directions and the two central screw shafts (2, 3) merge with the same axes into the screw shafts (2a, 3a) of the pressure build-up zone and are continued in the latter zone in the form of an interengaging counter-rotatory screw (2a, 3a).

2. Apparatus according to Claim 1, characterised in that the screw shafts (1 to 4) form a V-shaped separating trough.

3. Apparatus according to Claim 1, characterised in that all the screw shafts (1 to 4) lie in one plane.

4. Apparatus according to one of Claims 1 to 3, characterised in that the screw pump in the separating zone consists of four screw shafts (1 to 4) and in that the outer and central screw shafts are in each cass arranged symmetrically (about the central axis of the housing as the axis of symmetry) in relation to each other.

5. Apparatus according to one of Claims 1 to 4, characterised in that only one screw shaft (2 or 3) is driven.

6. Apparatus according to one of Claims 1 to 4, characterised in that the two central screw shafts (2, 3) are driven.

7. Apparatus according to one of Claims 1 to 6, characterised in that, in the region of the separating zone, the diameter of the screws and the distance between the two central screw shafts (2, 3) are selected with such dimensions that the latter two screws do not engage with each other and only the outer screws (1 and 4) engage with the central screws, and in that, in the region of the pressure build-up zone the central screws are continued with a larger diameter.

**Revendications**

Dispositif pour extraire des fluides fortement visqueux hors d'évaporateurs ou de réacteurs, comportant une zone d'extraction avec au moins quatre arbres à vis sans fin dont au moins certains engrènent l'un avec l'autre, ainsi qu'une pompe à vis sans fin à plusieurs arbres, montée en aval sous forme de ligne d'établissement de la pression, caractérisé en ce que les arbres à vis sans fin (1, 2, 3, 4) sont entraînés, par paire, pour tourner à contresens; et en ce que les deux arbres à vis sans fin médians (2, 3) se transforment, avec le même axe, en les arbres à vis sans fin (2a, 3a) de la ligne d'établissement de la pression et s'y prolongent gous forme de vis sans fin a angle d'hélice opposé engrenant l'une dans l'autre (2a, 3a).

2. Dispositif selon la revendication 1, caractérisé en ce que les arbres à vis sans fin (1 à 4) forment une cuve d'extraction en forme de V.

3. Dispositif selon la revendication 1, caractérisé en ce que tous les arbres de vis sans fin (1 à 4) sont situés dans un plan.

4. Dispositif selon l'une des revendications 1 à 3, caractérisé en ce que la pompe à vis sans fin qui se trouve dans la zone d'extraction est constituée de quatre arbres à vis sans fin (1 à 4); et en ce que les arbres à vis sans fin extérieurs et médians sont respestivement disposés symétriquement l'un par rapport à l'autre (autour de l'axe médian du carter servant d'axe de symétrie).

5. Dispositif selon l'une des revendications 1 à 4, caractérisé en ce qu'un seul arbre à vis sans fin (2 ou 3) est entraîné.

6. Dispositif selon l'une des revendications 1 à 4, caractérisé en ce que les deux arbres à vis sans fin médians (2, 3) sont entraînés.

7. Dispositif selon l'une des revendications 1 à 6, caractérisé en ce que dans la zone d'extraction on choisit le diamètre des vis sans fin et la distance entre les deux arbres à vis sans fin médians (2, 3) assez grands pour que ces deux vis sans fin ne viennent à engrènement et que seules les vis extérieures (1 et 4) viennent engrener avec les vis médianes; et en ce que, dans le zone de la ligne d'établissement de la pression, les vis sans fin médianes se prolongent avec un plus grand diamètre.

FIG. 1

FIG. 2

FIG. 3

FIG. 4